# EUROPÄISCHE PATENTSCHRIFT

(11) **EP 2 755 886 B1**
(45) Veröffentlichungstag und Bekanntmachung des Hinweises auf die Patenterteilung: **03.01.2018**
(21) Anmeldenummer: 12751533.6
(22) Anmeldetag: 30.08.2012
(51) Int. Cl.: B62K 5/027, B62K 5/05, B62K 7/04, B62K 3/00

(54) **TRANSPORTFAHRZEUG MIT DREIRAD-FAHRWERK**
TRANSPORT VEHICLE HAVING A THREE-WHEEL CHASSIS
VÉHICULE DE TRANSPORT DOTÉ D'UN CHÂSSIS À TROIS ROUES

(30) Priorität: 12.09.2011 DE 102011113226
(43) Veröffentlichungstag der Anmeldung: 23.07.2014
(73) Patentinhaber: Reck, Matthias, 64372 Ober-Ramstadt (DE)
(72) Erfinder: Reck, Matthias, 64372 Ober-Ramstadt (DE)
(74) Vertreter: Schwabe - Sandmair - Marx
(86) Internationale Anmeldenummer: PCT/EP2012/066922
(87) Internationale Veröffentlichungsnummer: WO 2013/037646

(56) Entgegenhaltungen:
- EP-A1- 1 630 081
- WO-A1-01/92082
- WO-A1-87/02633
- WO-A1-2005/058681
- DE-A1- 19 849 361
- DE-A1-102006 042 119

## Beschreibung

Die Erfindung betrifft ein Transportfahrzeug mit einem Dreirad-Fahrwerk.

Aus DE 4444115 A1 ist ein Ein-Personen-Leichtfahrzeug mit einem Dreirad-Fahrwerk bekannt, wobei das Dreirad-Fahrwerk zwei nicht-angetriebene, mit einer Lenkung gekoppelte Vorderräder und ein nicht-gelenktes, mit einem Antrieb gekoppeltes Hinterrad aufweist. Der Antrieb des Hinterrads erfolgt über eine Tretkurbel mit Kettenantrieb. Zusätzlich kann ein batteriegespeister Elektroantrieb vorgesehen sein. Die beiden Vorderräder weisen eine Einzelradaufhängung mit Doppelquerlenker auf. Alle drei Räder sind mit einer Schrägstellung der Räder bei Kurvenfahrt ausgestattet. Das Fahrzeug kann eine Vollverkleidung aufweisen. Zwischen den Achsen der Vorderräder und der Achse des Hinterrads ist ein Fahrerplatz angeordnet, wobei für den Fahrer eine liegende Position vorgesehen ist. Eine Anordnung für zusätzliches Gepäck ist nicht beschrieben.

Aus DE 102006042119 A1 ist ein Lastenroller mit einem prinzipiell vergleichbaren Dreirad-Fahrwerk bekannt. Auch hier weist das Dreirad-Fahrwerk zwei nicht-angetriebene, mit einer Lenkung gekoppelte Vorderräder und ein nicht-gelenktes, mit einem Antrieb gekoppeltes Hinterrad auf. Aus www.constin.de ist zusätzlich bekannt, dass der Antrieb des Hinterrads als Elektroantrieb ausgeführt sein kann. Über der Achse der Vorderräder befindet sich eine Transportplattform. In Fahrtrichtung gesehen dahinter ist ein Fahrerplatz angeordnet, wobei für den Fahrer eine aufrechte Position vorgesehen ist.

Aus DE 102007062017 A1 ist ein multifunktionales Flurföderzeug mit einem Dreirad-Fahrwerk bekannt. Für den Antrieb sind verschiedene Varianten eines Elektroantriebs beschrieben. Hinsichtlich der Lenkung ist das einzelne Rad allerdings immer als gelenktes Rad und die beiden seitlich beabstandeten Räder als nicht-gelenkte Räder beschrieben. Zwischen der Achse des einzelnen Rades und der Achsen der beiden seitlich beabstandeten Räder ist ein Fahrerplatz vorgesehen, wobei für den Fahrer eine aufrechte Position vorgesehen ist. Am heckseitigen Fahrzeugende ist eine Anhängervorrichtung angeordnet, und am frontseitigen Fahrzeugende kann ein zusätzliches Arbeitsgerät, wie z.B. eine Lastgabel, befestigt werden.

In der DE 198 49 361 A1 ist ein Tretroller mit einer Lenkung beschrieben, bei welcher Achsen mit jeweils zwei einzeln befestigten Rädern mit einem Gelenk drehbar an der Lenksäule bzw. am Trittbrett befestigt sind, um bei Kurvenfahrten Schräglagen des Rollers zu ermöglichen. Die Lenkung erfolgt durch die an sich bekannte Drehung der Lenksäule durch Betätigung der Lenkstange.

Die WO 87/02633 A1 offenbart die Lenkung mittels Drehung einer Lenkachse.

Die DE 10 2006 042 119 A1 beschreibt, dass ein Radpaar mittels einer Lenkstange zum Lenken verschwenkt werden kann. Bei einer Variante der Lenkung werden eine Lastplattform, die auf ein Drehgestell montiert ist, das Radpaar und gegebenenfalls eine Last um eine vertikale Achse mit dem Lenker gedreht. Alternativ können die Räder des Radpaares oder das hintere Rad auch einzeln gelenkt werden. Beschrieben wird auch eine Möglichkeit, wie der Lastenroller in eine Schräglage gebracht werden kann. Hierzu ist ein Getriebe vorgesehen, das an oder auf der Lastplattform montiert ist. Achsschenkel sind durch Kegelräder des Getriebes an der Lastplattform und einem Getriebedeckel auch über Kegelräder gehalten. Neigt sich die Lastplattform, so schwenken die Achsschenkel über das Getriebe gesteuert gleichmäßig nach oben und unten aus.

Bei der WO 2005/058681 A1 wird, wie dies z.B. bei Kickboards bekannt ist, über eine Neigung der Plattform gelenkt, womit die Vorderräder über angesteuerte Achsschenkel ausgelenkt werden. Dabei ist eine Lenkstange starr an der Plattform befestigt und wird zusammen mit der gesamten Plattform geneigt.

Die WO 01/92082 A1 offenbart eine an sich bekannte konventionelle Drehlenkung
EP 1630081 A1 offenbart ein Transportfahrzeug mit Dreirad-Fahrwerk gemäß dem Oberbegriff des Anspruchs 1. Obwohl demnach Transportfahrzeuge mit einem Dreirad-Fahrwerk grundsätzlich bekannt sind, konnten sich diese bisher noch nicht für einfache Transportfahrten an Stelle herkömmlicher Kraftfahrzeuge durchsetzen.

Aufgabe der Erfindung ist es daher, ein Transportfahrzeug zu schaffen, das für einfache Transportfahrten an Stelle eines Kraftfahrzeugs verwendet werden kann.

Diese Aufgabe wird durch die Merkmale des Patentanspruchs 1 gelöst.

Die erfindungsgemäße Lösung ist ein Transportfahrzeug mit Dreirad-Fahrwerk gemäß dem Anspruch 1. Ein besonderer Vorteil ist die Kombination eines Dreirad-Fahrwerks - wobei das Dreirad-Fahrwerk zwei nicht-angetriebene, mit einer Lenkung gekoppelte Vorderräder und ein nicht-gelenktes, mit einem Antrieb gekoppeltes Hinterrad aufweist - mit einer Anordnung der Gewichte, die auch eine Zuladung von Transportgewichten ermöglicht, die deutlich über dem Gewicht des Fahrers liegt.

Der Fahrerplatz befindet sich vorzugsweise kurz hinter der Achse der Vorderräder. Die gelenkten Vorderräder werden damit hauptsächlich mit dem Gewicht des Fahrers belastet. Gleichzeitig hat der Fahrer beim Fahren eine gute Übersicht.

Die Transportplattform befindet sich dagegen hinter dem Fahrerplatz. Das nicht-gelenkte Hinterrad wird damit hauptsächlich mit den Transportgewichten belastet. Bei dieser Anordnung sind Zuladungen im Bereich von beispielsweise 100 kg problemlos möglich.

Das erfindungsgemäße Transportfahrzeug ist damit ein Fahrzeug, mit dem energiesparend, schnell und unkompliziert sperrige und schwere Güter über kurze Distanzen transportiert werden können. Trotz der bekannten Fahrzeuge mit Dreirad-Fahrwerk wurden diese Transporte bisher immer noch mit Kraftfahrzeugen durchgeführt. Mit der Erfindung ist es nunmehr möglich, viele Transportanwendungen auf das erfindungsgemäße Transportfahrzeug zu verlagern. Typische Anwendungen sind Transporte im Bereich von 100 kg im Haushaltsbereich oder auf Werks- bzw. Messegeländen. Insbesondere sind die folgenden Einsatzfälle denkbar:
- Einkäufe, z.B. Getränkekisten, größere Einkäufe
- Transport auf Messegeländen, z.B. Werbeunterlagen, Werkzeuge
- Transport auf Werksgeländen, z.B. PC's, Werkzeuge, Bauteile oder Baugruppen
- Catering, z.B. auf Werksgeländen oder in urbanen Lebensräumen (Essen auf Rädern, Transport von Bierfässern ...)
- Flughafen, z.B. Personentransport oder Koffertransport
- Schiffs- und Yachthäfen, z.B. Transport von Seilen, Ersatzteilen

Durch die Verwendung eines Dreirad-Fahrwerks vereinfacht sich der Aufbau des Antriebsstrangs, da ein einzelnes angetriebenes Hinterrad kein Differenzial benötigt. Das Fahrzeug steht auf drei Rädern immer sicher, wobei Unebenheiten auf der Fahrbahn ohne aufwendige Federung ausgeglichen werden. Beide Vorderräder werden gebremst. Im Übrigen kann das Dreirad-Fahrwerk auch mit den Merkmalen - insbesondere mit einer Schrägstellung der Räder - ausgestattet werden, wie diese aus DE 4444115 A1 für Ein-Personen-Leichtfahrzeuge bekannt sind.

Nach einer weiteren bevorzugten Ausführungsform ist vorgesehen, dass die Transportplattform eine horizontale Stellfläche aufweist, deren Abstand zum Boden niedriger ist als der Durchmesser der beiden gleich ausgebildeten Vorderräder. Hierdurch weist die Transportplattform einen niedrigen Schwerpunkt auf. Vorzugsweise ist der Abstand der Stellfläche sogar niedriger als der Radius der beiden gleich ausgebildeten Vorderräder. Typischwerweise kann der Abstand vom Boden hierbei 10 cm - 15 cm betragen. Die Stellfläche kann das Maß für genormte Transportboxen aufweisen, z.B. 400 mm x 600 mm. Die Transportgüter lassen sich damit in genormten Transportboxen transportieren, die stapelbar sind und die sich über Anschlag-Winkel und Spanngurte fixieren lassen. Weiterhin ist es möglich, auf der Stellfläche optional Befestigungssysteme bzw. Fixiersysteme (z.B. aus Aluminiumprofilen), Anbindungen für Sitze (z.B. Kindersitze oder Krankensitze), Haltesysteme für Getränkekästen oder zusätzliche Befestigungsösen vorzusehen.

Nach einer weiteren bevorzugten Ausführungsform ist vorgesehen, dass der Antrieb als Elektroantrieb ausgebildet ist. Gefördert wird der Einsatz des erfindungsgemäßen Transportfahrzeugs damit auch durch die Tatsache, dass die Elektromobilität immer mehr an Bedeutung gewinnt. Durch neue Akkutechnologien und Antriebstechniken werden die entsprechenden Elektroantriebe immer leistungsfähiger.

Wie bereits erwähnt, werden beide Vorderräder gebremst. Zusätzlich ist es möglich, dass der Elektroantrieb bei Betätigung der Bremshebel ebenfalls bremst und Energie in den Akku zurückspeist (Rekuperation). Bei einer Zuladung von beispielsweise 100 kg liegt die maximale Geschwindigkeit des erfindungsgemäßen Transportfahrzeugs typischerweise bei 25 km/h. Nach einer weiteren bevorzugten Ausführungsform ist vorgesehen, dass der Elektroantrieb einen Akku und eine Steuerelektronik umfasst, die unterhalb der Transportplattform angeordnet sind, sowie einen Elektromotor umfasst, der als Nabenmotor ausgebildet ist. Auf diese Weise befindet sich auch der verhältnismäßig schwere Akku im Bereich der Transportplattform, wodurch die vorteilhafte Gewichtsverlagerung weiter unterstützt wird.

Nach einer weiteren bevorzugten Ausführungsform ist vorgesehen, dass die Bedienelemente für die Lenkung und für den Antrieb derart angeordnet sind, dass der Fahrer eine aufrechte Position einnimmt. Da das erfindungsgemäße Transportfahrzeug in der Regel nur verhältnismäßig kurze Fahrten zurücklegen muss, kann der Fahrer während der Fahrt eine aufrechte, vorzugsweise stehende Position einnehmen. Hierdurch kann in Fahrtrichtung Platz eingespart werden. Es ist aber auch denkbar, dass für den Fahrer ein Sitz vorgesehen ist oder dass der Fahrer die Transportboxen als Sitz verwendet, die auf der Transportplattform gestapelt sind. Zur Bedienung der Lenkung ist eine Lenkstange vorgesehen, die in Fahrtrichtung starr gelagert und quer zur Fahrtrichtung neigbar gelagert ist. Durch Neigen der Lenkstange quer zur Fahrtrichtung entsteht automatisch eine Gewichtsverlagerung des Fahrers zur Kurvenmitte hin, wodurch sich der Fahrer entgegen der Fliehkraft verlagert. Durch die starre Lagerung in Fahrtrichtung kann sich der Fahrer außerdem bei Beschleunigungs- oder Bremsvorgängen an der Lenkstange abstützen. Durch diese Lenktechnik ist es für den Fahrer möglich, einhändig zu fahren und dennoch über einen sicheren Stand zu verfügen. Die Lenkstange kann T-förmig oder nur als einfache Stange ausgeführt sein. Die Bedienung des Antriebs ist über einen Drehgriff, einen Daumenhebel, einen Ein-/Ausschalter oder auch über ein Fußpedal möglich. Für die Bedienung der Bremse kann ein Bremshebel oder auch ein Fußpedal vorgesehen sein. Weitere Einzelheiten und Vorteile der Erfindung werden anhand der Figuren beschrieben. In diesen zeigt
- Fig. 1: eine Draufsicht des erfindungsgemäßen Transportfahrzeugs,
- Fig. 2: eine Seitenansicht des erfindungsgemäßen Transportfahrzeugs,
- Fig. 3: einen Schnitt entlang der Linie A-A in Fig. 1,
- Fig. 4: eine Variante des erfindungsgemäßen Transportfahrzeugs mit Transportsitz,
- Fig. 5: eine Variante des erfindungsgemäßen Transportfahrzeugs mit Regendach und Sattelstütze, und
- Fig. 6: eine Variante des erfindungsgemäßen Transportfahrzeugs mit Befestigungssystem auf der Transportplattform.

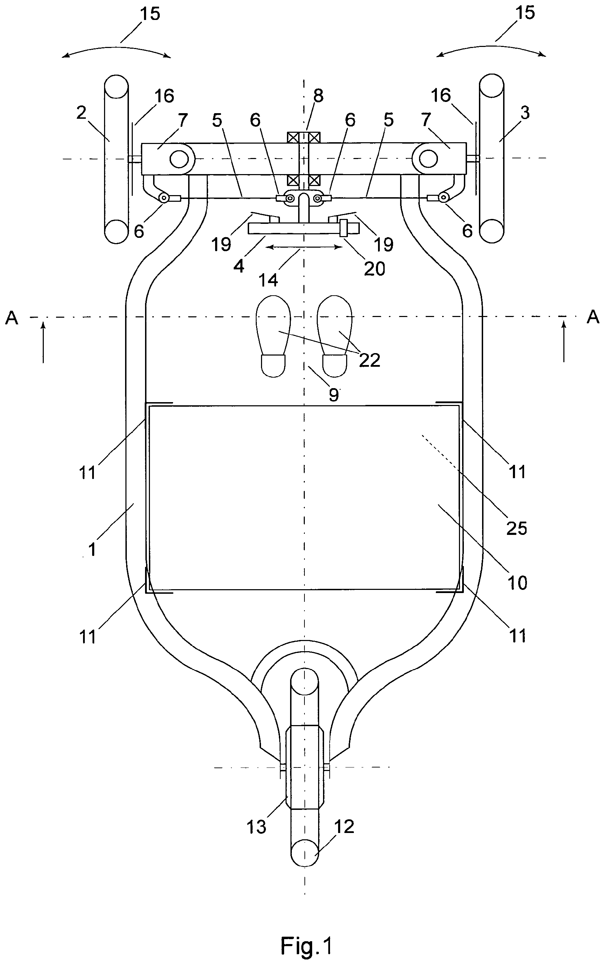

Fig. 1 zeigt eine Draufsicht des erfindungsgemäßen Transportfahrzeugs. Das erfindungsgemäße Transportfahrzeug umfasst als wesentliche Komponenten die beiden Vorderräder 2 und 3, die Lenkstange 4, das Hinterrad 12 mit dem Nabenmotor 13, den Fahrerplatz 9 des Fahrers 22 und die Transportplattform 25 inmitten des Rahmens 1. Der Fahrerplatz 9 und die Transportplattform 25 können als eine gemeinsame Fläche ausgebildet sein.

Die beiden lenkbaren Vorderräder 2 und 3 sind jeweils an einem anlenkbaren Achsschenkel 7 befestigt. Die beiden Achsschenkel 7 sind über je ein Kugelgelenk 6 und je eine Schubstange 5 mit je einem weiteren Kugelgelenk 6 an der Lenkstange 4 angebunden. Durch die Bewegung 14 der Lenkstange 4, die um die Lenkachse 8 gelagert ist, bewegen sich die beiden Vorderräder nach rechts und links in Richtung 15.

Über den Gasgriff 20 kann das Fahrzeug in seiner Geschwindigkeit gesteuert werden, der Schalter 21 dient der Richtungsumkehr. Die Scheibenbremsen 16 können über den Handbremshebel 19 betätigt werden.

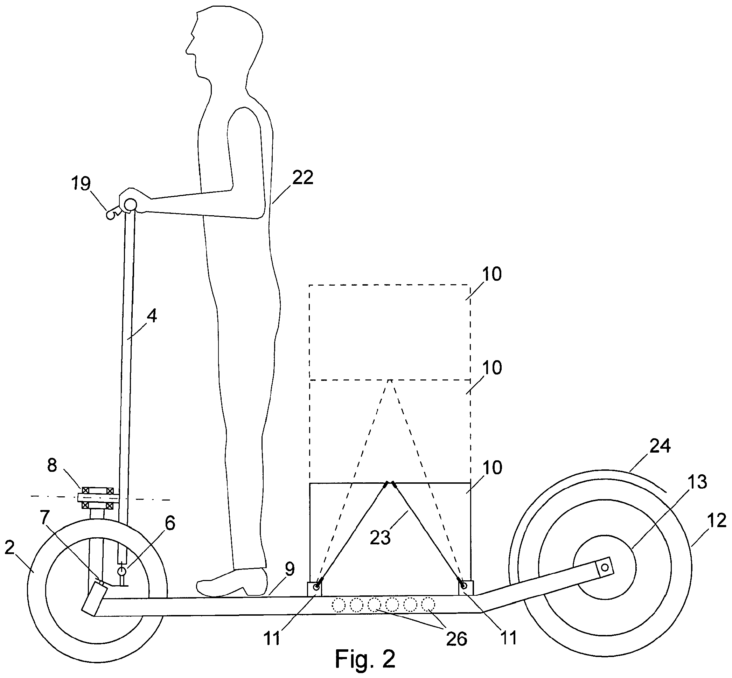

Die Transportplattform 25 weist Befestigungswinkel 11 auf, mit denen genormte Transportboxen 10 fixiert werden können. Fig. 2 zeigt eine Seitenansicht des erfindungsgemäßen Transportfahrzeugs. Der Fahrer 22 steht auf dem Fahrerplatz 9. Er kann über die Bremshebel 19 das Fahrzeug abbremsen. Genormte Transportboxen 10 können auch mehrfach gestapelt und mit Spanngurten 23 befestigt werden. Der Fahrer 22 steht vor den Transportboxen 10, im Heck des Fahrzeugs befindet sich der Antriebsmotor 13. Die Batterien 26 des Antriebsstranges befinden sich in einer Zwischenebene des Rahmens 1 direkt unter der in den Transportboxen 10 verstauten Ladung. Durch die Anordnung Fahrer 22, Transportboxen 10, Batterien 26 und Motor 13 direkt hintereinander wird eine sehr gleichmäßige Lastverteilung und gute Kippstabilität beim Bremsen erreicht.

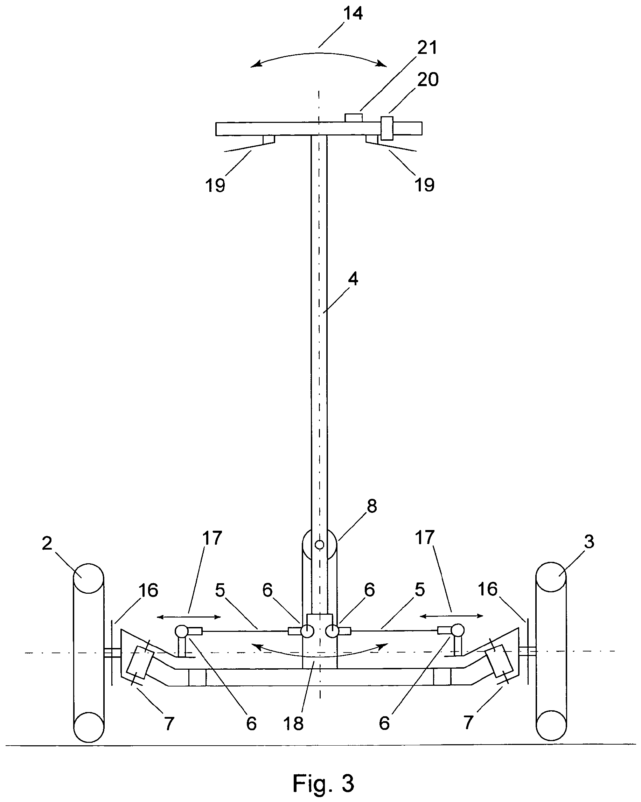

Fig. 3 zeigt einen Schnitt entlang der Linie A-A in Fig. 1. Hiermit ist der Lenkmechanismus im Detail zu erkennen. Wie schon bei Bild 1 beschrieben sind die beiden lenkbaren Vorderräder 2 und 3 jeweils an einem anlenkbaren Achsschenkel 7 befestigt. Die Achschenkel 7 sind über je ein Kugelgelenk 6 und je eine Schubstange 5 mit je einem weiteren Kugelgelenk 6 an der Lenkstange 4 angebunden. Durch die Bewegung 14 der Lenkstange 4, die um die Lenkachse 8 gelagert ist, bewegt sich der untere Teil der Lenkstange invers zur Bewegung 14 in Richtung 18, damit bewegen sich nun die beiden Vorderräder nach rechts und links in Richtung 15. Weitere Ausführungsformen der Anlenkung wären beispielsweise durch eine Drehbewegung der Lenkstanke 4 um ihre vertikale Achse oder eine nicht-invertierende Neigung möglich, indem die Anlenkungshebel der Achsschenkel 7 nicht nach hinten sondern nach vorne zeigen würden.

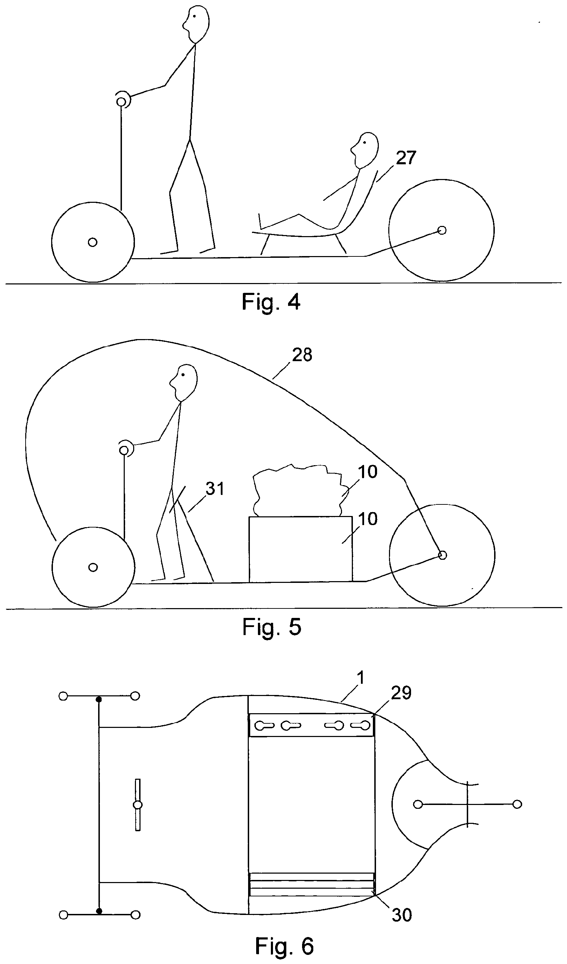

Fig. 4 zeigt eine Variante des erfindungsgemäßen Transportfahrzeugs mit Transportsitz 27. Der Transportsitz kann für einen Erwachsenen oder auch als Kindersitz ausgelegt sein. Es ist auch möglich, mehrere Sitze nebeneinander vorzusehen. Die Sitze können beispielsweise über ein variables Befestigungssystem montiert werden, wie dies in Fig. 6 dargestellt ist.

Fig. 5 zeigt eine Variante des erfindungsgemäßen Transportfahrzeugs mit Regendach und Sattelstütze. Das Regendach 28 wird am Rahmen 1 befestigt. Bei Bedarf kann es montiert oder demontiert werden. Für den Fahrer ist eine Sattelstütze 31 vorgesehen, auf der sich der Fahrer abstützen kann.

Fig. 6 zeigt eine Variante des erfindungsgemäßen Transportfahrzeugs mit Befestigungssystem auf der Transportplattform. Das Befestigungssystem ist vorzugsweise als variables Befestigungssystem ausgeführt, z.B. in Schlüssellochausführung 29 zum Einhaken von Spanngurten oder in T-Nut-Ausführung 30 zum Befestigen mit T-Nutensteinen und Schrauben. Diese beiden Varianten sind nur als Beispiel genannt, es können auch beliebige andere Befestigungsarten (z.B. Befestigungsösen, Haltewinkel oder Schnellverschlüsse) vorgesehen werden.

## Patentansprüche

1. Transportfahrzeug mit Dreirad-Fahrwerk
wobei das Dreirad-Fahrwerk zwei nicht-angetriebene, mit einer Lenkung gekoppelte Vorderräder (2, 3) und ein nicht-gelenktes, mit einem Antrieb (13, 26) gekoppeltes Hinterrad (12) aufweist,
wobei zwischen den Achsen der Vorderräder (2, 3) und der Achse des Hinterrades (12) eine Transportplattform (25) angeordnet ist und
in Fahrtrichtung gesehen vor der Transportplattform (25) ein Fahrerplatz (9) angeordnet ist,
wobei zur Bedienung der Lenkung eine Lenkstange (4) vorgesehen ist, die in Fahrtrichtung starr gelagert ist; und die Lenkstange (4) quer zur Fahrtrichtung um eine Lenkachse (8) neigbar gelagert ist, **dadurch gekennzeichnet, dass** sich der untere Teil der Lenkstange (4), an welchem über je ein Kugelgelenk (6), eine Schubstange (5), ein weiteres Kugelgelenk (6) und einen anlenkbaren Achsschenkel (7) die lenkbaren Vorderräder (2, 3) befestigt sind, invers zu einer Bewegung des oberen Teils der Lenkstange (4) bewegt, wodurch die Vorderräder (2, 3) nach rechts und links bewegt werden können.

2. Transportfahrzeug nach Anspruch 1, **dadurch gekennzeichnet, dass** die Transportplattform (25) eine horizontale Stellfläche aufweist, deren Abstand zum Boden niedriger ist als der Radius der beiden gleich ausgebildeten Vorderräder (2, 3).

3. Transportfahrzeug nach einem der Ansprüche 1 - 2, **dadurch gekennzeichnet, dass** der Antrieb (13, 26) als Elektroantrieb ausgebildet ist.

4. Transportfahrzeug nach Anspruch 3, **dadurch gekennzeichnet, dass** der Elektroantrieb einen Akku (26) und eine Steuerelektronik umfasst, die unterhalb der Transportplattform (25) angeordnet sind, sowie einen Elektromotor (13) umfasst, der als Nabenmotor ausgebildet ist.

5. Transportfahrzeug nach einem der Ansprüche 1 - 4, **dadurch gekennzeichnet, dass** die Bedienelemente für die Lenkung und für den Antrieb (13, 26) derart angeordnet sind, dass der Fahrer (22) eine aufrechte Position einnimmt.

## Claims

1. A transport vehicle comprising a three-wheeled carriage,
wherein the three-wheeled carriage comprises two non-driven front wheels (2, 3) which are coupled to a steering, and a non-jointed rear wheel (12) which is coupled to a drive (13, 26),
wherein a transport platform (25) is arranged between the axles of the front wheels (2, 3) and the axle of the rear wheel (12), and
a driver's area (9) is arranged in front of the transport platform (25) as viewed in the direction of travel,
wherein a steering rod (4) which is provided for operating the steering is mounted rigidly in the direction of travel,
and the steering rod (4) is mounted such that it can be inclined transverse to the direction of travel about a steering axis (8),
**characterised in that** the lower part of the steering rod (4), to which the steerable front wheels (2, 3) are each fastened via a ball joint (6), a push rod (5), another ball joint (6) and an axle arm (7) which can be articulated, is moved inversely with respect to a movement of the upper part of the steering rod (4), thus enabling the front wheels (2, 3) to be moved to the right and left.

2. The transport vehicle according to Claim 1, **characterised in that** the transport platform (25) comprises a horizontal storage area, wherein the distance between the horizontal storage area and the ground is less than the radius of the two identically formed front wheels (2, 3).

3. The transport vehicle according to any one of Claims 1 to 2, **characterised in that** the drive (13, 26) is formed as an electric drive.

4. The transport vehicle according to Claim 3, **characterised in that** the electric drive comprises a battery (26) and a control logic which are arranged below the transport platform (25), and an electric motor (13) which is formed as a hub motor.

5. The transport vehicle according to any one of Claims 1 to 4, **characterised in that** the operating elements for the steering and the drive (13, 26) are arranged such that the driver (22) assumes an upright position.

## Revendications

1. Véhicule de transport avec châssis de tricycle, dans lequel le châssis de tricycle présente deux roues avant (2, 3) non motrices couplées à une direction et une roue arrière (12) non dirigée couplée à un organe commande (13, 26), une plateforme de transport (25) étant disposée entre les axes des roues avant (2, 3) et l'axe de la roue arrière (12) et vu dans le sens de déplacement, un poste de conduite (9) étant disposé devant la plateforme de transport (25), une barre de direction (4), qui est montée de manière fixe dans le sens de déplacement, étant prévue pour la commande de la direction ; et la barre de direction (4) étant montée de manière inclinable, perpendiculaire au sens de déplacement autour d'un axe de direction (8), **caractérisé en ce que** la partie inférieure de la barre de direction (4), à laquelle les roues avant directrices (2, 3) sont fixées via une articulation sphérique (6), une tige de poussée (5), une autre articulation sphérique (6) et un porte-fusée (7) susceptible d'être articulé, se déplace à l'inverse d'un mouvement de la partie supérieure de la barre de direction (4), les roues avant (2, 3) pouvant ainsi être déplacées vers la droite et la gauche.

2. Véhicule de transport selon la revendication 1, **caractérisé en ce que** la plateforme de transport (25) présente une surface d'appui, dont la distance du sol est inférieure au rayon des deux roues avant (2, 3) de configuration identique.

3. Véhicule de transport selon l'une des revendications 1 et 2, **caractérisé en ce que** l'organe de commande (13, 26) est conçu en tant que moteur électrique.

4. Véhicule de transport selon la revendication 3, **caractérisé en ce que** le moteur électrique comprend une batterie (26) et un système électronique de commande, qui sont disposés sous la plateforme de transport (25), et comprend également un moteur électrique (13) conçu en tant que moteur de moyeu.

5. Véhicule de transport selon l'une des revendications 1 à 4, **caractérisé en ce que** les éléments de commande pour la direction et pour l'organe de commande (13, 26) sont disposés de manière que le conducteur (22) prenne une position verticale.
